# FASCICULE DE BREVET EUROPEEN

(11) **EP 2 853 823 B1**
(45) Date de publication et mention de la délivrance du brevet: **10.03.2021**
(21) Numéro de dépôt: 14174895.4
(22) Date de dépôt: 30.06.2014
(51) Int. Cl.: F24F 1/00, F24F 11/00

(54) **Système de ventilation paramétrable**
Parametrierbares Belüftungssystem
Adjustable ventilation system

(30) Priorité: 28.06.2013 FR 1356348
(43) Date de publication de la demande: 01.04.2015
(73) Titulaire: Amphoux, André, F-75012 Paris (FR)
(72) Inventeur: Amphoux, André, F-75012 Paris (FR)
(74) Mandataire: Derambure Conseil

(56) Documents cités:
- WO-A1-02/088505
- US-A- 5 215 498
- US-A1- 2004 041 036
- US-A1- 2010 078 494
- US-A1- 2011 264 274

## Description

L'invention concerne le domaine des systèmes de ventilation paramétrables destinés à permettre un flux d'air dans un espace d'occupation humaine.

Dans un domaine connexe, US 2011/264,274 illustre un exemple d'une centrale de chauffage/ventilation/climatisation d'un espace d'activité.

Dans les bâtiments des secteurs résidentiel et tertiaire, la ventilation répond avant tout à une qualité de l'air intérieur pour assurer un besoin d'hygiène et de santé des occupants : Apport d'air neuf pour la respiration ; élimination des pollutions intérieures liées à la présence et aux activités humaines.

La conservation du bâti nécessite également une aération maîtrisée pour éviter en particulier des humidités excessives dans des enveloppes de plus en plus étanches.

La ventilation est aussi soumise à des contraintes, généralement réglementées :
Les consommations d'énergie liées à la ventilation (déperditions par renouvellement d'air, consommation électrique des ventilateurs) sont limitées par la réglementation thermique RT 2012 en construction neuve et RTex en réhabilitation. Le document WO 02/088,505 donne un exemple de ce que la RTex désigne dans la catégorie « Aération par ouverture des fenêtres ».

En termes purement énergétiques, et compte tenu notamment de l'augmentation progressive de l'isolation des bâtiments, les déperditions liées à la ventilation représentent une part relative de plus en plus importantes des besoins de chauffage des bâtiments (jusqu'à 30 % parfois). Il est d'autant plus important d'adapter au mieux la ventilation aux besoins.

Une meilleure analyse des besoins et de recherche d'une solution de ventilation permettrait de réaliser des installations de ventilation efficaces, c'est-à-dire adaptées et économes.

Enfin, il ne faut pas négliger le potentiel d'économies et d'amélioration de la qualité de l'air intérieur lors de réhabilitation de bâtiments existants, lié à l'amélioration des installations de ventilation existantes (ou à la mise en œuvre de systèmes de ventilation quand ils n'existent pas).

La ventilation modulée existe depuis un certain temps. On connait par exemple WO 2004/076932. Dans ce document, il s'agit principalement de régler la vitesse d'entraînement du ventilateur disposé sur le toit pour prendre en compte les paramètres climatiques du moment : température extérieure et/ou vitesse du vent. A ce titre, on utilise un module de commande (référence 5 dans ce document) représenté disposé sur le toit du bâtiment, et recevant des données relatives aux conditions extérieures au bâtiment, pour régler la vitesse d'entraînement du ventilateur.

Ce document mentionne également qu'un paramètre additionnel de réglage peut être la présence ou l'absence d'occupants ou de polluants dans le logement ventilé.

L'installation d'un module de commande sur le toit, adapté pour recevoir des paramètres climatiques, et recevant en outre des informations relatives à l'intérieur du logement, est complexe. Par ailleurs, l'objectif principal de ce système est de s'adapter aux conditions climatiques. Finalement, ce système ne permet pas une grande flexibilité.

La présente invention vise à proposer une solution optimisable gérant la ventilation à l'intérieur d'un espace d'occupation humaine.

Selon un premier aspect, l'invention a pour objet un système de ventilation paramétrable selon la revendication 1.

Grâce à ce système, on dispose d'un boîtier installable dans l'espace d'occupation, et intégrant une détection et un traitement des caractéristiques de l'air ambiant au niveau du boîtier. On peut donc disposer le boîtier à l'endroit le plus adapté du local à ventiler, c'est-à-dire à l'endroit où les caractéristiques de l'air ambiant sont les plus sensibles.

Les paramètres chimique ou physique utilisés sont des paramètres représentatifs de la qualité de l'air.

Un dispositif de ventilation paramétrable est un dispositif de ventilation dont une caractéristique gérant le flux d'air à travers lui est réglable de manière automatisée.

Selon une réalisation, le système d'acquisition est adapté pour détecter au moins un paramètre chimique et au moins un paramètre physique de l'air ambiant au niveau du boîtier.

Selon une réalisation, le paramètre chimique est représentatif d'une concentration d'au moins une espèce prédéterminée dans l'air ambiant.

Selon une réalisation, l'espèce prédéterminée est choisie parmi l'eau, le CO, le CO2, le formaldéhyde, un composant organique, les fumées.

Selon une réalisation, le paramètre physique est représentatif de la température, de l'hygrométrie relative de l'air ambiant ou de de l'hygrométrie absolue de l'air ambiant.

Selon une réalisation, le dispositif de communication comprend un émetteur porté par le boîtier et adapté pour transmettre sans fil en direction du dispositif de ventilation ledit au moins un paramètre de réglage.

Selon une réalisation, le dispositif de communication comprend un connecteur adapté pour être branché à un fil reliant le boîtier au dispositif de ventilation.

Selon une réalisation, le système de ventilation comprend une pluralité de bouches de ventilation paramétrables de l'espace d'occupation humaine, distantes entre elles d'ouvertures de sections variables réglables chacune de manière automatisée, destinées à permettre un flux d'air dans un espace d'occupation humaine, dans lequel le dispositif de commande est adapté pour commander une pluralité desdites bouches de ventilation paramétrables, le système informatisé de traitement est adapté pour déterminer au moins un paramètre de réglage de chaque bouche de ventilation distante à partir dudit au moins un paramètre détecté par le système d'acquisition,
et le dispositif de communication est adapté pour transmettre en direction de chaque bouche de ventilation ledit au moins un paramètre de réglage respectif,
chaque bouche de ventilation réglable de manière automatisée comprend :
- un dispositif de communication, adapté pour recevoir, depuis le dispositif de commande ledit au moins un paramètre de réglage associé,
- un système de contrôle, adapté pour modifier la bouche de ventilation de sorte à modifier le flux d'air à partir du paramètre de réglage associé.

Selon une réalisation, le système informatisé de traitement comprend une mémoire stockant une base de données comprenant des données relatives à des relations entre des valeurs potentielles du paramètre de réglage et des valeurs potentielles dudit au moins un paramètre détecté,
et le système informatisé de traitement comprend un calculateur adapté pour déterminer une valeur du paramètre de réglage à partir de la base de données et d'une valeur dudit au moins un paramètre détecté.

Selon une réalisation, le dispositif de commande comprend en outre un dispositif de communication entrant, porté par le boîtier, adapté pour recevoir depuis un système d'acquisition distant, au moins un paramètre additionnel, et le système informatisé de traitement est adapté pour déterminer l'au moins un paramètre de réglage de la bouche de ventilation distante également à partir dudit au moins un paramètre additionnel.

Selon une réalisation, le paramètre additionnel est un paramètre chimique ou physique de l'air ambiant de l'espace d'occupation humaine distant du boîtier.

Selon une réalisation, le paramètre additionnel est un paramètre représentatif des conditions extérieures à l'espace d'occupation humaine.

Selon un autre aspect, l'invention se rapporte à un système de ventilation paramétrable comprenant un dispositif de commande tel que ci-dessus, comprenant en outre un système d'acquisition distant adapté pour détecter au moins un paramètre additionnel, et un dispositif de communication sortant, relié au système d'acquisition distant, et adapté pour transmettre en direction du dispositif de communication entrant le paramètre additionnel détecté par le système d'acquisition distant.

Selon une réalisation, le système comprend une interface utilisateur adaptée pour intéragir avec le dispositif de commande.

Selon un autre aspect, l'invention se rapporte à un bâtiment ou une portion de bâtiment comprenant une enceinte entourant un espace d'occupation humaine, et un système de ventilation paramétrable tel que ci-dessus, dans lequel le dispositif de commande, le ou les dispositifs de ventilation, et/ou le ou les systèmes d'acquisition distants sont disposés distants les uns des autres, notamment dans plusieurs pièces distinctes du bâtiment.

Selon un autre aspect, l'invention se rapporte à un procédé de commande d'au moins un dispositif de ventilation paramétrable distant réglable de manière automatisée, destiné à permettre un flux d'air dans un espace d'occupation humaine, selon la revendication 15.

On décrit maintenant brièvement les figures des dessins.
La figure 1a est une vue de face schématique d'un bâtiment.
La figure 1b est une vue de dessus schématique d'une portion de bâtiment munie d'un système de ventilation paramétrable.
La figure 2 est une vue schématique d'un système de ventilation paramétrable selon un mode de réalisation, équipant la portion de bâtiment de la figure 1.
La figure 3 est un schéma illustrant la mise en oeuvre d'une base de données stockée dans une mémoire du système informatisé de traitement du dispositif de commande du système de ventilation paramétrable de la figure 2.
La figure 4 est une vue similaire à la figure 1 pour un deuxième mode de réalisation.
La figure 5 est une vue schématique d'un dispositif de ventilation paramétrable prise en coupe à travers le plafond d'un espace d'occupation humaine.
La figure 6 est une vue schématique similaire à la figure 2 pour un troisième mode de réalisation.

Sur les figures, les mêmes signes de références désignent des objets identiques ou similaires.

Ci-après un exposé détaillé de plusieurs modes de réalisation de l'invention assorti d'exemples et de référence aux dessins.

La présente invention se rapporte à des systèmes de ventilation d'espace d'occupation humaine. Par « espace d'occupation humaine », on fait référence ici à tout espace clos susceptible de recevoir une occupation humaine. En particulier, on fait référence à des bâtiments, par exemple du type comprenant des logements collectifs ou individuels (immeuble d'habitation, maison,...), ou des espaces d'activités humaines (centres commerciaux, usine, bureau, élevage,...). Par « clos », on entend qu'un tel espace d'occupation humaine est sensiblement contenu dans une enceinte, même si cette enceinte est susceptible de comprendre des ouvrants, tels que des portes, fenêtres,... Les portes, fenêtres, ou ouvrants, peuvent être dans un état ouvert ou fermé. Même dans l'état fermé, les ouvrants peuvent comporter une certaine porosité à l'air, tel qu'un passage ménagé pour le passage de l'air, permettant le passage de l'air.

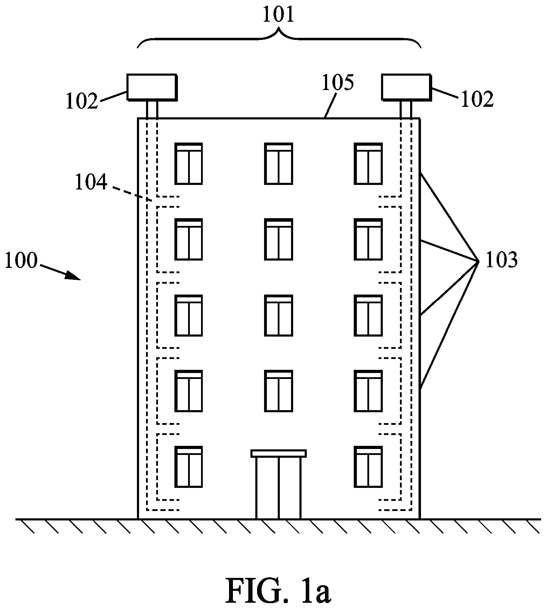

En référence à la figure 1a, le bâtiment 100 est équipé d'un module de système de ventilation 101. Le module de système de ventilation 101 comporte un ou plusieurs dispositif(s) de ventilation 102 de bâtiment de type connu destiné à assurer la ventilation naturelle et hybride de différents appartements 103 prévus dans un bâtiment, par exemple. Ainsi, le dispositif de ventilation 102, dans le cas d'un bâtiment 100 d'habitation regroupant une pluralité d'appartements 103 est associé à un conduit d'extraction d'air 104 desservant l'ensemble des appartements 103 et destiné à évacuer un fluide gazeux de l'intérieur des appartements 103 vers l'extérieur du bâtiment 100 par un système de tirage du fluide gazeux. Toutefois, l'invention n'est pas limitée aux bâtiments 100 d'habitation et dans des variantes de réalisation le module de système de ventilation 101 peut être prévu sur tous types de bâtiments, par exemple des bâtiments tertiaires ou industriels.

Le dispositif de ventilation 102 est, dans une première variante un dispositif de ventilation statique. Par exemple, le dispositif de ventilation statique a pour seuls moteurs le tirage thermique (lié à la différence de température entre l'intérieur et l'extérieur du logement) et le vent (tirage éolien). Dans une deuxième variante de réalisation, le dispositif de ventilation est dynamique, à savoir mécanisée et qui maintient en permanence des conditions de tirage particulières. Dans une troisième variante de réalisation, le dispositif de ventilation est stato-dynamique, à savoir un dispositif mécanique vient assister un dispositif statique quand les conditions naturelles de tirage ne sont plus réunies. En outre, le dispositif de ventilation peut être prévu avec ou sans induction d'air.

Toutefois, l'invention n'est pas limitée à la ventilation naturelle et hybride de bâtiments, elle peut être appliquée à tous types d'installations de ventilation. Par exemple, elle peut être appliquée à la ventilation haute, moyenne, basse ou très basse pression, ou encore à l'évacuation des produits de combustion en ventilation mécanique contrôlée.

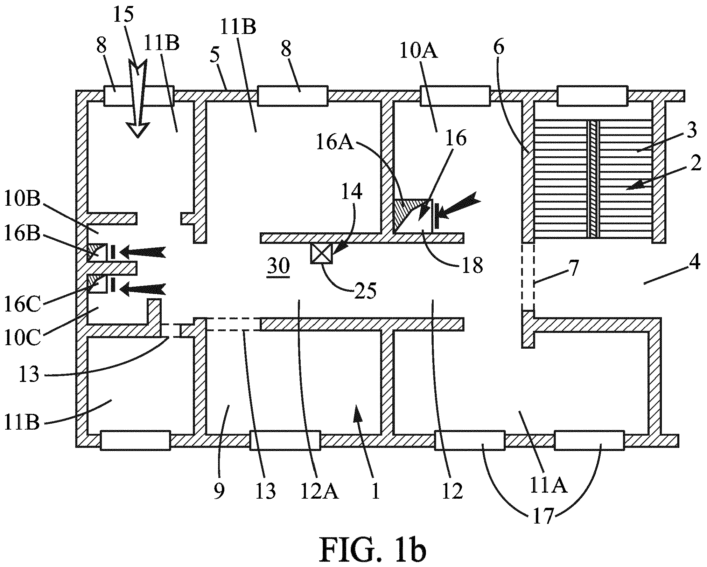

Le dispositif de ventilation 102 est placé vers la sortie du conduit d'extraction d'air 104 du bâtiment 100. Tel qu'illustré sur la figure 1b, le dispositif de ventilation 102 est situé sur le toit 105 du bâtiment 100. En d'autres termes, le dispositif de ventilation 102 est disposé à l'extrémité sommitale du conduit d'extraction d'air 104. Le dispositif de ventilation 102 assure, comme précédemment mentionné, le tirage dans le conduit d'extraction d'air 104 du fluide à évacuer vers l'extérieur du bâtiment 100.

La figure 1b représente à titre purement illustratif un tel espace d'occupation humaine 1 qui, à titre d'exemple, est un appartement 103 d'un immeuble 100. L'immeuble peut comprendre des parties communes 2, tel qu'un escalier 3 et un palier 4. L'espace d'occupation humaine 1 considéré ici est donc délimité d'une part par des parois externes 5 du bâtiment, des parois internes 6 du bâtiment formant une paroi externe de l'espace d'occupation humaine 1, et des ouvrants portées par les parois externes 5 ou interne 6, tel qu'une porte palière 7 et des fenêtres 8.

L'espace d'occupation humaine 1 est par ailleurs délimité par un sol 9 et un plafond, non visible, par exemple parallèle au sol.

L'espace d'occupation humaine 1 est suffisamment étendu pour pouvoir permettre une occupation humaine, étant entendu qu'il n'est pas nécessaire que l'espace d'occupation humaine 1 soit effectivement occupé, de manière permanente ni même temporaire, par des humains.

L'espace d'occupation humaine 1 comporte des pièces de service 10. Les pièces de services sont par exemple une cuisine 10 A, un cabinet de toilette 10 B, et une salle de bains 10 C. L'espace occupation humaine comporte également des pièces de vie 11. Les pièces de vie 11 sont par exemple un séjour 11 A et une ou des chambres 11 B. Par ailleurs, des espaces intermédiaires 12 permettent de circuler entre les différentes pièces 10 A, 10 B,10 C, 11 A et 11 B. Les espaces intermédiaires 12 comprennent par exemple des couloirs, des escaliers, des paliers,.... Chacun des espaces et pièces mentionné ci-dessus peut être doté d'un ou plusieurs ouvrants 7 ou 8. Par ailleurs, des portes 13 peuvent permettre d'alternativement autoriser ou restreindre l'accès à certaines de ces pièces ou espaces.

L'exemple de la figure 1b décrit un exemple relativement classique d'un espace d'occupation humaine 1, dans lequel un espace intermédiaire 12, en l'occurrence un couloir 12 A dessert la plupart des pièces de l'espace d'occupation humaine 1. En particulier, le couloir 12 A est situé entre les différentes pièces de services 10 et de vie 11.

L'espace d'occupation humaine 1 est muni d'un système de ventilation 14 qui sera décrit plus en détail ci-après.

Un système de ventilation 14 comprend d'une part des entrées d'air 15 dans l'espace d'occupation humaine 1. Par « entrée d'air » 15, on comprend des systèmes qui soient plus perméable à l'air que les parois externes 5 ou les parois internes 6 au bâtiment. Il peut par exemple s'agir d'entrée d'air naturelles, telles que par exemple une fente ménagée au niveau de la porte 7 pour permettre son articulation, côté latéral niveau charnières, ou d'un espace avec le sol 12. On peut également prévoir des ouvertures spécialement aménagées à cet effet dans et/ou au niveau des fenêtres 8. Dans l'exemple décrit ci-dessus, les entrées d'air 15 sont des systèmes passifs, à savoir qu'on ne génère pas un flux d'air entrant au niveau des entrées d'air 15 de manière active.

Le système de ventilation 14 comprend d'autre part des sorties d'air 16. Les sorties d'air 16 sont des systèmes permettant à l'air présent dans l'espace d'occupation humaine 1 de sortir de celui-ci vers l'extérieur. L'extérieur désigne d'une part l'extérieur à l'espace d'occupation humaine, tel que défini ci-dessus délimité par les parois externes 5, les parois internes 6, le sol 12 et le plafond, mais également l'extérieur du bâtiment lui-même qui incorpore l'espace d'occupation humaine. En effet, le bâtiment peut comprendre, outre l'espace d'occupation humaine, par exemple des combles ou volumes non habitables, ou d'autres logements. Dans l'exemple présenté, et comme c'est le cas classiquement, les sorties d'air 16 sont disposées dans les pièces de services, telles que des sorties d'air 16 A, 16 B, 16 C disposées respectivement dans la cuisine 10 A, le cabinet de toilette 10 B et la salle de bains 10 C.

Au moins une entrée d'air 15 et/ou au moins une sortie d'air 16 peut comporter un dispositif de ventilation 17. Par exemple, chaque entrée d'air 15 et/ou chaque sortie d'air 16 comporte un dispositif de ventilation 17. Un dispositif de ventilation 17 peut être alternativement un dispositif de ventilation passive, tel qu'une bouche d'ouverture, ou actif, tels qu'un dispositif capable de générer un flux d'air lorsqu'il est alimenté en énergie dans l'espace d'occupation humaine 1. Un tel dispositif capable de générer un flux d'air est généralement associé opérativement à une bouche d'ouverture. Dans ce cas, ce dispositif capable de générer un flux d'air n'est pas nécessairement disposé dans l'espace d'occupation humaine lui-même, mais peut être disposé dans un conduit 104 reliant l'espace d'occupation humaine 1 à l'extérieur, notamment à l'extérieur du bâtiment (par exemple sur le toit 105, comme c'est le cas pour le dispositif de ventilation 102).

Par ailleurs, au moins un dispositif de ventilation 17 peut être un dispositif de ventilation paramétrable 18. Un dispositif de ventilation est dit paramétrable quand il peut être modifié pour influer sur le flux d'air dans l'espace d'occupation humaine 1. Un exemple typique d'un dispositif de ventilation paramétrable 18 est une bouche équipant une entrée d'air 15 ou une sortie d'air 16 dont la section transversale peut voir sa superficie modifiée, par exemple par actionnement par un utilisateur. Un dispositif de ventilation paramétrable 18 peut être modifié manuellement par un utilisateur, ou par un automate contrôlé. Un autre exemple d'un dispositif de ventilation paramétrable 18 est un ventilateur dont l'énergie de ventilation est contrôlée. On comprend ici qu'un dispositif de ventilation paramétrable 18 est un dispositif de ventilation pouvant être modifié par un occupant de l'espace d'occupation humaine 1 pour influer sur le flux d'air dans l'espace d'occupation humaine 1 au cours de l'utilisation normale du système de ventilation. Il ne s'agit pas ici de l'installation du système de ventilation par un professionnel qualifié, moment auquel un dispositif de ventilation pourra être configuré une fois pour toutes, ou en tout cas pour une période longue dans le temps (ce dispositif pourra éventuellement être reconfiguré par un professionnel équipé de manière périodique mais espacée dans le temps de plusieurs mois ou années). Par la suite, on s'intéresse ici à un dispositif de ventilation paramétrable 18 réglable de manière automatisée, sans action manuelle de l'occupant, même si un tel dispositif de ventilation paramétrable 18 réglable de manière automatisée peut le cas échéant en outre être réglable par action manuelle.

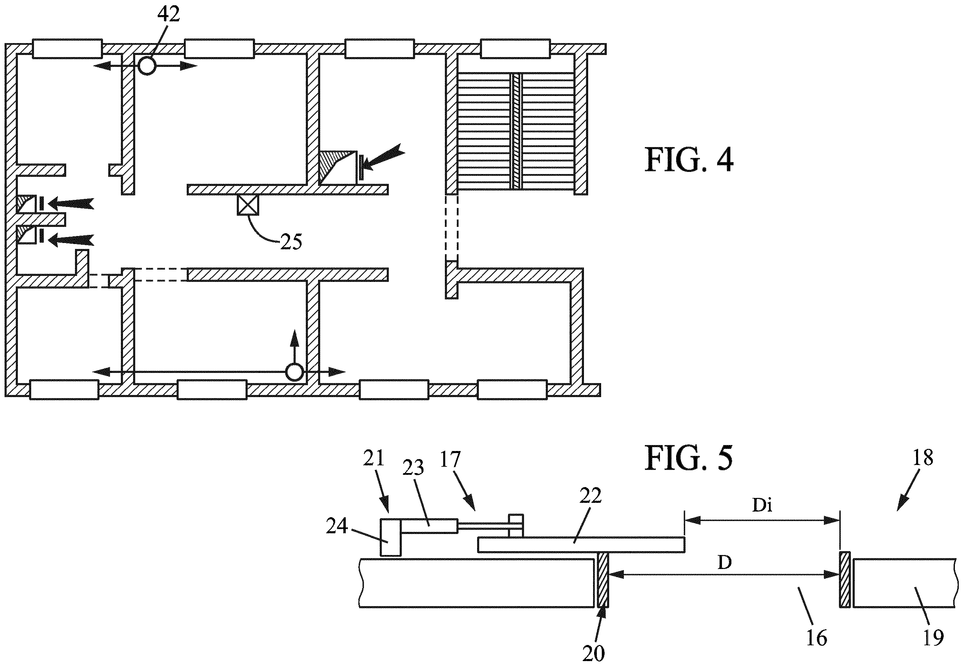

La figure 5 décrit de manière schématique un exemple d'un dispositif de ventilation paramétrable. Par exemple, on a représenté sur la figure 5 le plafond 19 de l'espace d'occupation humaine 1. Le plafond 19 comporte une sortie d'air 16 munie d'un dispositif de ventilation 17. Le dispositif de ventilation 17 comporte une bouche 20 définissant une ouverture traversante dans le plafond 19. La bouche 20 comporte une ouverture maximale représentée par sa dimension transversale D. L'ouverture de la bouche 20 est réglable entre cette ouverture maximale et une ouverture minimale qui, le cas échéant, peut être d'ouverture nulle, ou être supérieure à un seuil minimal prédéterminé. Dans l'exemple représenté, la bouche 20 est représentée réglée avec une ouverture intermédiaire Dᵢ, intermédiaire entre les ouvertures maximale et minimale. L'ouverture de la bouche 20 est réglable selon un paramètre de réglage. Le paramètre de réglage détermine le degré d'ouverture de la bouche entre ses ouvertures minimale et maximale. Dans sa plus simple expression, le paramètre de réglage est un paramètre booléen, chaque valeur du paramètre correspondant respectivement à un des deux états que le dispositif de ventilation peut prendre (notamment marche/arrêt ou ouvert/fermé ou maximal/minimal). En variante, le paramètre de réglage peut prendre au moins 3 valeurs, par exemple un nombre entier ou réel de valeurs.

Un système de contrôle 21 permet de modifier le dispositif de ventilation 17 selon le paramètre de réglage. Le système de contrôle 21 comprend par exemple un volet 22 mobile de manière à alternativement ouvrir ou fermer l'ouverture traversante dans le plafond reliant l'espace d'occupation humaine 1 à l'extérieur par l'intermédiaire du conduit 104 à travers la sortie d'air 16. Le système de contrôle 21 comprend également un actionneur 23 apte à déplacer le volet 22 de manière à alternativement ouvrir ou fermer l'ouverture traversante dans le plafond, à réception d'une commande. Le système de contrôle 21 comprend également un processeur 24 adapté pour commander l'actionneur 23 selon un paramètre de réglage du dispositif de ventilation paramétrable.

Ainsi, selon la valeur d'un paramètre de réglage, le processeur 24 va commander l'actionnement de l'actionneur 23 pour déplacer le volet 22 par rapport au plafond 19 de manière à modifier la superficie de l'ouverture traversante.

On notera que ce mode de réalisation n'est qu'un exemple particulier, et qu'on pourrait également prévoir un ou plusieurs volets mobiles selon un autre degré de liberté, par exemple par pivotement, différents types d'actionneurs,....

Le système de ventilation 14 comprend également un dispositif de commande 25. Le dispositif de commande 25 est disposé distant des dispositifs de ventilation 17 décrits ci-dessus. Par « distants », on comprend que le dispositif de commande 25 se situe à distance d'un dispositif de ventilation 17, à l'échelle de manipulation par un être humain. En particulier, le dispositif de commande 25 et le dispositif de ventilation 17 peuvent être des dispositifs séparés distants manipulables indépendamment l'un de l'autre, et pouvant être fixés indépendamment l'un de l'autre dans l'espace d'occupation humaine 1. À titre d'exemple, sur la figure 1b, on a représenté que le dispositif de commande 25 été disposé sensiblement dans une région centrale de l'espace d'occupation humaine 1 (en vue de dessus). Notamment, le dispositif de commande 25 peut être disposé entre une entrée d'air 15 de l'espace occupation humaine 1 et une sortie d'air 16 de celui-ci, dans une configuration d'écoulement d'air typique de l'espace occupation humaine 1. À titre d'exemple, on a représenté le dispositif de commande 25 dans l'espace intermédiaire 12 constitué du couloir 12A. Le dispositif de commande 25 peut être fixé au plafond 19 ou sur une paroi verticale de l'espace d'occupation humaine 1, de préférence dans une zone supérieure de celle-ci.

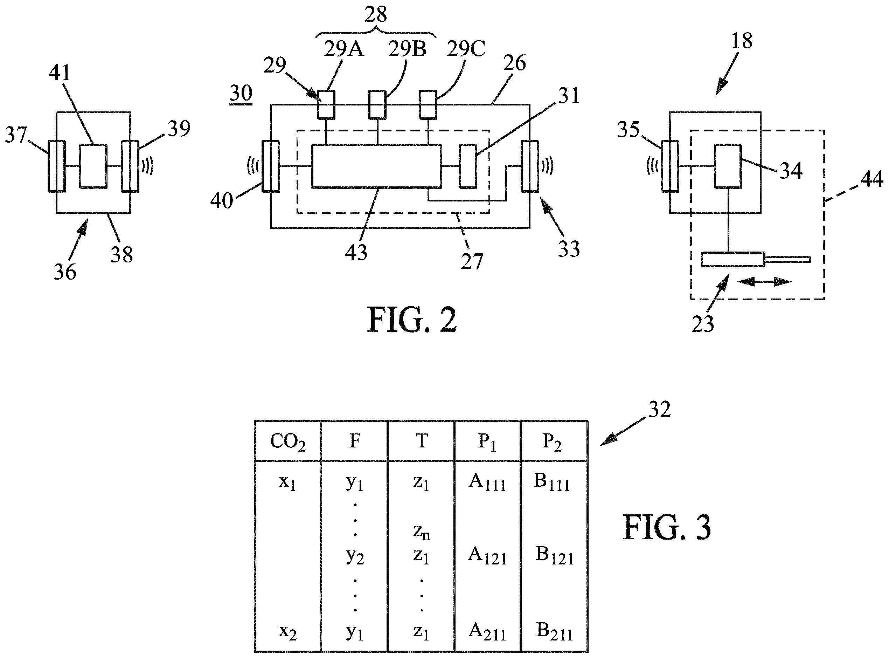

Le dispositif de commande 25 est représenté de manière plus détaillée sur la figure 2. Il comporte un boîtier 26 extérieur formant une enceinte, et susceptible d'être fixé sur un élément structurel adapté de l'espace occupation humaine 1, tel qu'une paroi ou un plafond. La fixation se fait par exemple par vissage. Le boîtier 26 porte un système informatisé de traitement 27, tel qu'un processeur. Le boîtier 26 porte également un système d'acquisition 28 solidaire du boîtier 26. Le système acquisition 28 comprend un ou plusieurs capteurs 29, notamment des capteurs adaptés pour détecter respectivement au moins un paramètre chimique et/ou au moins un paramètre physique de l'air ambiant 30 au niveau du boîtier 26. À titre de capteur 29, on peut par exemple prévoir l'un et/ou l'autre d'un capteur capable de déterminer une concentration d'eau 29 A dans l'air ambiant 30, un capteur capable de déterminer une concentration de monoxyde de carbone (CO) 29 B dans l'air ambiant, un capteur capable de déterminer une concentration en composants organiques 29 C dans l'air ambiant, un capteur capable de déterminer une concentration en dioxyde de carbone (CO₂) dans l'air ambiant, un capteur capable de déterminer une concentration en formaldéhyde dans l'air ambiant, un capteur capable de déterminer une concentration de fumée dans l'air ambiant, un capteur de température ou d'hygrométrie relative ou absolue de l'air ambiant, ou autre.

De tels capteurs sont connus en soi, et ne feront pas l'objet d'une description spécifique ici.

Chaque capteur 29 est relié au système informatisé de traitement 27 de manière à transmettre à celui-ci des données représentatives du paramètre respectif de l'air ambiant au niveau du boîtier 26. C'est-à-dire que soit le capteur 29 est lui-même capable de déterminer un paramètre de l'air ambiant à partir de la mesure prise, et transmet la valeur de ce paramètre au système informatisé de traitement 27, soit le système informatisé de traitement 27 comprend lui-même un calculateur 43 capable de déterminer la valeur de ce paramètre de l'air ambiant à partir des données mesurées par le capteur 29. Si nécessaire, le système informatisé de traitement 27 pourra prendre en compte les données mesurées par plusieurs capteurs pour déterminer un paramètre représentatif de l'air ambiant au niveau du boîtier 26. Ceci va par exemple être le cas si plusieurs capteurs sont destinés à mesurer un même paramètre, et que le système informatisé de traitement 27 va prendre en compte les différentes mesures pour déterminer un paramètre représentatif, par exemple pour s'affranchir des différences de mesures propres à chacun des capteurs eux-mêmes. Selon un autre exemple, le système informatisé de traitement 27 peut utiliser des données en provenance de plusieurs capteurs déterminant des paramètres différents, tels que par exemple la concentration en composants organiques et la température, pour déterminer un paramètre représentatif de l'air ambiant 30 au niveau du boîtier 26 prenant en compte ces plusieurs paramètres.

Par ailleurs, le système informatisé de traitement 27 est adapté pour déterminer au moins un paramètre de réglage de la bouche de ventilation paramétrable réglable de manière automatisée distante à partir dudit au moins un paramètre détecté. En ce qui concerne le paramètre détecté ici, on fait référence ou bien au paramètre détecté tel que délivré par un ou plusieurs capteurs, ou à un paramètre représentatif de l'air ambiant, déterminé par le système informatisé de traitement à partir de ces paramètres détectés. Par exemple, le dispositif de commande 25 comprend une mémoire 31 stockant une loi permettant de déterminer une valeur d'un paramètre de réglage de la bouche de ventilation paramétrable réglable de manière automatisée distant à partir de paramètres détectés, et le système informatisé de traitement 27 est configuré pour extraire de la mémoire 31 un paramètre de réglage de la bouche de ventilation paramétrable distante réglable de manière automatisée à partir des paramètres détectés. À titre d'exemple, comme représentée sur la figure 3, la mémoire 31 peut stocker une table 32 comportant, en entrée, différentes valeurs pour des paramètres représentatifs de l'air ambiant, notamment de la concentration en dioxyde de carbone (X₁,..., X₂,...), en fumée F (Y₁,..., Y₂,...), et la température T (Z₁,... Zₙ) et associant, pour chaque trinôme de valeurs détectées représentatives de l'air ambiant (Xᵢ, Yⱼ, Zₖ) une valeur A_{IJK} pour un paramètre P1 d'une bouche de ventilation paramétrable réglable de manière automatisée distante, et une valeur B_{IJK} pour un paramètre P2 d'une bouche de ventilation paramétrable réglable de manière automatisée distante. Toute méthode adaptée peut être utilisée pour déterminer une valeur des paramètres P1, P2 à partir des paramètres détectés caractéristiques de l'air ambiant, tel que par régression linéaire, ou autre. Par ailleurs, comme dans l'exemple représenté, le système informatisé de traitement 27 pourra déterminer un paramètre de réglage de la bouche de ventilation paramétrable, ou deux paramètres d'une même bouche de ventilation paramétrable, ou plus, ou un ou plusieurs paramètres de plusieurs bouches de ventilation distinctes paramétrables.

Les paramètres présentés ci-dessus sont listés de manière individuelle. Toutefois, certains paramètres pourraient être considérés de manière collective. Par exemple, on peut regrouper les paramètres en trois pacro-paramètres :
- Paramètres de confort (température, hygrométrie),
- Paramètres de confinement (CO₂),
- Paramètres de composés organiques volatils (formaldéhydes, ...).

D'autres paramètres peuvent être inclus dans une de ces listes, comme par exemple le benzène, le trichloroéthylène, le monoxyde de carbone, le radon, ....

La loi stockée dans la mémoire 31, permettant de déterminer une valeur d'un paramètre de la bouche de ventilation paramétrable distante à partir de paramètres détectés représentatifs de l'air ambiant au niveau du boîtier pourra être prédéterminée une fois pour toute. Elle pourra être prédéterminée une fois pour toute, et fonction de l'architecture du système de ventilation. Par exemple, la loi stockée dans la mémoire 31 pourra être prédéterminée une fois pour toute pour l'espace d'occupation humaine 1, en prenant en compte l'un et/ou l'autre des paramètres suivants :
- le volume de l'espace d'occupation humaine 1,
- la surface au sol de l'espace d'occupation humaine 1,
- la superficie cumulée des ouvrants 7 et 8 de l'espace occupation humaine 1,
- le type d'espace d'occupation humaine 1 (appartement, duplex, pavillon, local commercial, bureau,... ),
- la configuration de l'espace d'occupation humaine (nombre et disposition des pièces, des pièces de service, des pièces de vie, des pièces intermédiaires,... ),
- la configuration du système de ventilation (l'emplacement du dispositif de commande 25, les emplacements relatifs du dispositif de commande 25, des entrées d'air 15, des sorties d'air 16, des dispositifs de ventilation, paramétrables ou non, réglables de manière automatisée ou non, les caractéristiques des dispositifs de ventilation paramétrables (dimension des bouches, puissance des ventilateurs,...),...).

La loi stockée dans la mémoire 31 pourra également prendre en compte d'autres paramètres, tels que différentes configurations prédéfinies. Ainsi, on pourra disposer de plusieurs lois prédéfinies selon certains critères. On peut par exemple prévoir une loi spécifique au jour et une loi spécifique à la nuit, une loi spécifique à l'été et une loi spécifique à l'hiver, une loi spécifique aux jours de semaine et une loi spécifique aux jours de week-end,... Il s'agit donc ici de prendre en compte un éventuel paramètre additionnel relatif à des conditions qui ne sont pas propres à l'espace occupation humaine.

En variante, on n'utilisera pas nécessairement une telle relation explicite entre paramètres détectés représentatifs de l'air ambiant au niveau du boîtier et paramètre de réglage de la bouche de ventilation paramétrable. Ainsi, en variante, on pourra prévoir que, partant d'une configuration donnée, le système informatisé de traitement 27 est adapté pour modifier le réglage de la bouche de ventilation paramétrable à partir d'une modification d'une valeur détectée pour un paramètre représentatif de l'air ambiant au niveau du boîtier, sans toutefois faire une détermination explicite de ce paramètre de réglage. Par exemple, si un capteur détecte une augmentation de la concentration en dioxyde de carbone au niveau de l'air ambiant au niveau du boîtier 26, au-dessus d'un certain seuil prédéterminé, le système informatisé de traitement déterminera qu'il est nécessaire d'augmenter le débit de ventilation. Ainsi, le paramètre de réglage de la bouche de ventilation distante pourra être choisi parmi {-1 ; 0 ; 1 }, ou 0 représente « ne pas modifier la bouche de ventilation distante », -1 représente « diminuer la ventilation au niveau de la bouche de ventilation distante », et 1 représente « augmenter la ventilation au niveau de la bouche de ventilation distante ».

Le dispositif de commande 25 comporte également un dispositif de communication 33. Le dispositif de communication 33 est porté par le boîtier 26 et est adapté pour transmettre, en direction de la bouche de ventilation paramétrable, le paramètre de réglage déterminé par le système informatisé de traitement 27. On utilise tout type de dispositif de communication adapté, notamment filaire ou sans fil. Le dispositif de communication 33 sera décrit plus en détail ci-après en relation avec la bouche de ventilation paramétrable.

La figure 2 représente également la bouche de ventilation paramétrable 18 tel qu'elle a déjà été décrite partiellement ci-dessus en relation avec la figure 5. La bouche de ventilation paramétrable comporte un système informatisé de traitement 34 et un dispositif de communication 35. Le dispositif de communication 35 de la bouche de ventilation paramétrable 18 est adapté pour recevoir le paramètre de réglage en provenance du dispositif de commande 25. Le dispositif de communication 35 de la bouche de ventilation paramétrable 18 et le dispositif de communication 33 du dispositif de commande 25 sont appariés pour former ensemble un système de communication pour pouvoir communiquer des informations entre eux, notamment dans le sens allant du dispositif de commande 25 vers la bouche de ventilation paramétrable 18. La communication entre ces deux dispositifs de communication est par exemple réalisée sans fil, par exemple par ondes radio, ou de manière filaire. Dans ce dernier cas, un fil s'étend entre le dispositif de commande 25 et la bouche de ventilation paramétrable 18 pour transporter l'information requise entre les deux dispositifs.

Dans l'hypothèse où on disposerait de plusieurs bouches de ventilation paramétrables 18 distantes du dispositif de commande 25, et distantes entre eux, le dispositif de communication 33 du dispositif de commande 25 est adapté pour communiquer à chaque bouche de ventilation paramétrable 18 distincte le paramètre de réglage qui lui est propre. Dans une version filaire, un bornier du dispositif de commande 25 comprend une pluralité de bornes reliées chacune à une des bouches de ventilation paramétrables 18, et un paramètre de réglage, le cas échéant distinct, est affecté à chaque borne. Dans les versions sans fil, on peut prévoir que chaque bouche de ventilation paramétrable 18 comporte une adresse propre, et que le dispositif de communication 33 du dispositif de commande 25 émette à la fois les adresses des bouches de ventilation paramétrables 18 concernés, et, associé à chaque adresse, le paramètre de réglage qui lui est propre.

Le système informatisé de traitement 34 de la bouche de ventilation paramétrable 18 est adapté pour traiter une information reçue par le dispositif de communication 35, et pour modifier la bouche de ventilation de sorte à modifier le flux d'air à partir de ce paramètre de réglage. À titre illustratif, l'actionneur 23, également présenté sur la figure 5, est représenté sur la figure 2. L'actionneur 23 est adapté pour recevoir une commande à partir du système informatisé de traitement 34, prenant en compte le paramètre de réglage, et pour modifier la bouche de ventilation paramétrable 18 de manière à modifier le flux d'air passant à travers celle-ci. Ainsi, le système informatisé de traitement 34 et l'actionneur 23 forme ensemble un système de contrôle 44 de la bouche de ventilation paramétrable 18.

Par ailleurs, et comme présenté également sur la figure 2, en variante, le système de ventilation paramétrable pourrait également prendre en compte, pour déterminer le paramètre de réglage du ou des bouche(s) de ventilation paramétrable(s) 18, un autre paramètre, ou paramètre additionnel, par exemple représentatif des conditions extérieures à l'espace occupation humaine 1. Un tel paramètre additionnel peut par exemple comprendre la température extérieure au bâtiment dans lequel se situe l'espace occupation humaine 1, ou la vitesse du vent au niveau d'un orifice d'évacuation d'air hors de l'espace occupation humaine 1, un paramètre temporel (jour/nuit, semaine/week-end) ou social (présence/absence, jour d'activité/jour chômé, ...) ou autre.

En variante, le système de ventilation paramétrable pourrait également prendre en compte, pour déterminer le paramètre de réglage de la bouche de ventilation paramétrable 18, un paramètre additionnel similaire des paramètres détectés déjà par le dispositif de commande 25, et en un autre emplacement de l'espace d'occupation humaine 1. Le paramètre additionnel peut ainsi par exemple être une concentration locale dans l'air ambiant en eau, monoxyde de carbone, dioxyde de carbone, composants organiques, fumée, ou autre. Ainsi, on peut disposer d'un système distant 36, disposé soit dans l'espace occupation humaine 1, soit en dehors, et adapté pour déterminer un paramètre local, et pour communiquer ce paramètre au dispositif de commande 25.

Ainsi, le système distant 36 peut comprendre un système d'acquisition distant 37 qui comprend un capteur, par exemple du type décrit ci-dessus, porté par un boîtier 38. Le boîtier 38 est distant du boîtier 26. Le boîtier 38 porte également un dispositif de communication 39 adapté pour communiquer avec un dispositif de communication 40 adapté du dispositif de commande 25. Le système distant 36 pourra comprendre un système informatisé de traitement 41 adapté pour traiter et mettre en forme les données issues du capteur du système d'acquisition distant, et pour contrôler le dispositif de communication sortant 39.

Selon cette variante, les dispositifs de communication 33, 40 du dispositif de commande 25 pourront le cas échéant être regroupés en un dispositif de communication unique, comprenant un nombre suffisant de bornes dans la version filaire, et/ou un nombre suffisant d'adresses dans la version sans fil.

Dans cette variante, le système informatisé de traitement 27 sera adapté pour prendre en compte l'information provenant du système distant 36 pour déterminer les paramètres de réglage du dispositif de ventilation paramétrable 18.

Ci-après, on décrit les procédés d'installation, de configuration, et de commande utilisant le système qui vient d'être décrit.

On se place pour commencer dans l'hypothèse d'une installation d'un système de ventilation paramétrable dans un espace d'occupation humaine 1. On installe les dispositifs de ventilation (notamment les bouches de ventilation), y compris les dispositifs de ventilation paramétrables dans l'espace d'occupation humaine 1. Ces dispositifs de ventilation sont disposés par exemple au niveau des entrées d'air, des sorties d'air, et dans les pièces de services, et/ou dans les conduits et sur le toit.

On installe le dispositif de commande 25, par exemple au plafond de l'espace occupation humaine 1. Le dispositif de commande est installé distant des dispositifs de ventilation, notamment des dispositifs de ventilation réglables.

On alimente en énergie le dispositif de commande 25, notamment pour que le système d'acquisition 28 et le système informatisé de traitement 27 puissent fonctionner. On utilise par exemple une batterie interne, où on relie le dispositif de commande 25 au secteur. On installe finalement le système de communication, en faisant en sorte que le dispositif de commande 25 puisse communiquer avec les dispositifs de ventilation réglables, soit de manière filaire (branchement) soit sans fil (configuration informatique).

Si nécessaire, on configure le dispositif de commande 25, par exemple pour prendre en compte les particularités de l'espace d'occupation humaine 1 à ventiler. Cette configuration peut comprendre, pour le professionnel en charge de l'installation, la sélection d'un ou plusieurs paramètres pour la mise en oeuvre du système de ventilation. Par exemple, la mémoire 31 comprend une pluralité de lois préétablies, et le dispositif de commande 25 comprend un moyen de sélectionner l'une de ces lois. Le moyen de sélectionner peut être un moyen informatique ou physique, tel qu'un commutateur réalisé sur le boîtier 26. Par exemple, le commutateur peut présenter des positions correspondant à des modes relatifs au type d'espace d'occupation humaine 1, par exemple habitation individuelle/logements collectifs/bureau, des modes relatifs à l'environnement, par exemple région chaude/région froide, ou autre. Le moyen de sélectionner peut également permettre de renseigner le volume, et l'emplacement des différents composants du système de ventilation paramétrable et de l'espace d'occupation humaine 1.

Une fois le système de ventilation configuré, le dispositif de commande met en oeuvre un procédé de commande d'une bouche de ventilation paramétrable distante de manière à régler le flux d'air dans l'espace occupation humaine 1.

Ainsi, le système d'acquisition 28, solidaire du boîtier 26, ayant accès à l'air ambiant 30 dans l'espace occupation humaine 1, détecte au moins un paramètre de l'air ambiant au niveau du boîtier.

Le système informatisé de traitement 27, portée par le boîtier 26, détermine le paramètre de réglage des bouches de ventilation paramétrables réglables de manière automatisée distantes à partir du ou des paramètres détectés. Le cas échéant, on utilise également des paramètres détectés par des systèmes d'acquisition distants, et transmis par un dispositif de communication au système informatisé de traitement 27.

Puis, le dispositif de communication 33 communique et transmet en direction de la bouche de ventilation réglable le paramètre de réglage.

La bouche de ventilation réglable 18 reçoit le paramètre de réglage, et se modifie afin de modifier le flux d'air au niveau de l'espace d'occupation humaine 1. Par exemple, si le dispositif de commande 25 commande d'augmenter le niveau de ventilation dans l'espace occupation humaine, par exemple en raison de l'augmentation de la concentration en monoxyde de carbone détectée dans l'air ambiant au niveau du boîtier 26, l'ouverture des bouches au niveau des sorties d'air 16 et/ou des entrées d'air 15 peut être augmentée de manière automatisée.

Le cas échéant, lors d'une opération de maintenance régulière, on peut modifier la loi mise en oeuvre par le dispositif de commande 25. Par exemple, cette modification peut être faite suite à un changement de réglementation relative à des seuils imposés pour les concentrations de certaines des espèces chimiques dans l'air ambiant.

On notera que le dispositif de commande 14 pourra être disposé de manière préférentielle à un endroit spécialement adapté pour déterminer au mieux les caractéristiques de l'air ambiant représentatif de l'air ambiant dans l'espace d'occupation humaine 1. Notamment, le dispositif de commande 14 pourra être placé relativement dans le centre du logement, vue de dessus, dans un emplacement de fort passage, ou dans une pièce particulière de l'espace d'occupation humaine 1.

La figure 4 représente une variante de réalisation du système selon la figure 1b. Dans cette variante, on a repris l'ensemble des caractéristiques du mode de réalisation de la figure 1b, en rajoutant un système d'insufflation d'air 42. Ainsi, dans ce mode de réalisation, au lieu d'avoir une entrée d'air 15 purement passive, le débit d'air entrant directement au niveau de l'entrée d'air 15 peut être commandé. Par exemple, on peut commander une vitesse de rotation du ventilateur d'insufflation d'air du système d'insufflation d'air 42.

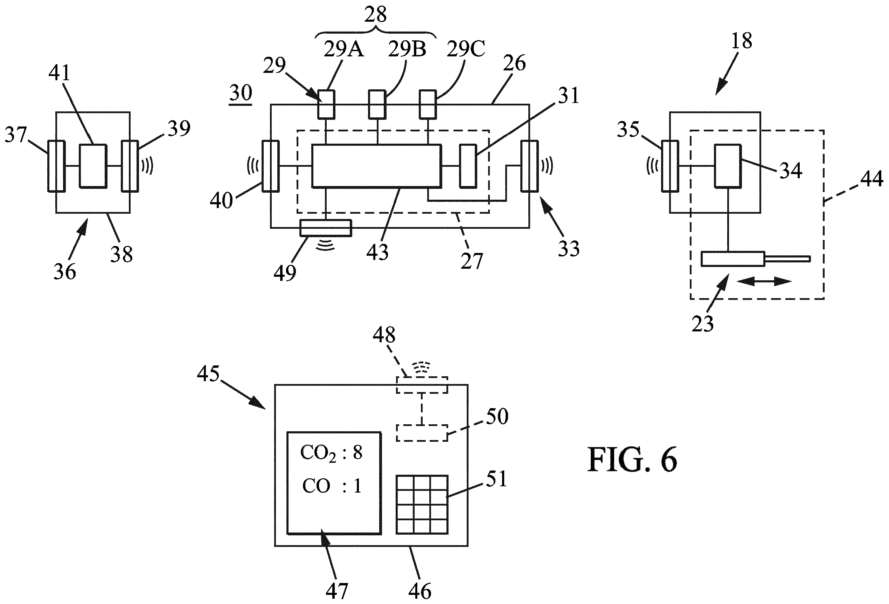

Selon une variante de réalisation, telle que représentée sur la figure 6, on peut également utiliser une interface utilisateur 45. L'interface utilisateur 45 comprend un boîtier 46 installable de manière accessible à un utilisateur du logement (par exemple fixé au mur à hauteur d'yeux d'un humain adulte, dans l'entrée de l'espace d'occupation humaine 1). Le boîtier 46 porte un moyen d'affichage 47, comme un écran, permettant d'afficher des informations. Les informations sont par exemple le mode de fonctionnement actuel d'une ou plusieurs bouche(s) de ventilation paramétrable(s), la loi appliquée, un ou plusieurs paramètres de l'air ambiant, toute information stockée dans la mémoire 31. Le boîtier 46 porte également un système de communication 48 adapté pour communiquer avec un système de communication 49 correspondant du dispositif de commande 25 (le cas échéant regroupé avec les autres systèmes de communication de celui-ci). On a par exemple recours à un système sans fil ou filaire.

L'interface utilisateur 45 comporte également un processeur 50 qui contrôle les différents composants de l'interface utilisateur 45, tel que le moyen d'affichage 47, le système de communication 48, pour pouvoir afficher les informations nécessaires stockées dans la mémoire 31. L'interface utilisateur 45 comporte également un clavier 51 (ou une dalle tactile de l'écran 47) permettant à l'utilisateur de communiquer avec le système de ventilation paramétrable. Le clavier 51 pourrait par exemple être utilisé par l'utilisateur pour naviguer dans des menus permettant de choisir l'affichage dispensé sur le moyen d'affichage 47. Par ailleurs, en option, le clavier 51 pourrait permettre à l'utilisateur d'influer le fonctionnement du dispositif de commande. Le clavier 51 pourrait par exemple permettre à l'utilisateur de choisir la loi à appliquer parmi les lois prédéterminées stockées dans la mémoire 31.

Le cas échéant, l'interface utilisateur 45 pourra être utilisée par l'installateur lui-même pour la configuration du système de ventilation. Ainsi, l'interface utilisateur 45 pourra permettre plusieurs niveaux d'autorisations, entre un niveau bloqué pour une personne ne disposant pas d'autorisation nécessaire, un niveau utilisateur pour une personne disposant d'une autorisation « utilisateur » (notamment un ou plusieurs occupants de l'espace d'occupation humaine pouvant choisir une loi à appliquer parmi plusieurs lois), un niveau installateur pour une personne disposant d'une autorisation « installateur » (notamment pouvant configurer les lois ou les modifier pour s'adapter à des changements de réglementation). Ces différents niveaux d'autorisation sont définis par mots de passe et/ou interfaces matérielles (clé spécifique par exemple).

La présente invention peut présenter un intérêt particulier dans le domaine de la ventilation d'habitat collectif. En effet, elle permet de moduler la ventilation de différents locaux associés à un ventilateur commun par l'intermédiaire de conduits 104. Ainsi, le ventilateur commun 102 peut être, le cas échéant, réglé ou réglable pour définir une stratégie générale de ventilation des logements qui lui sont associés, sur des critères, par exemple climatiques, et destinés par exemple à optimiser la consommation énergétique du ventilateur commun 102. Les bouches réglables permettent de moduler au niveau de chaque logement cette stratégie générale pour prendre en compte les spécificités de chaque logement, permettant ainsi d'optimiser les économies d'énergies réalisées sur les débits d'air extraits par rapport aux besoins des taux de concentration des polluants du moment pour assurer une bonne qualité d'air intérieur. En effet, différents logements associés à un même ventilateur peuvent répondre à des besoins en ventilation différents à chaque moment donné. Par exemple, certains peuvent être des commerces ou espaces d'activités tertiaires (écoles, bureaux, ...) et d'autres des habitations, avec par conséquent des teneurs en polluants différentes à un moment de la journée, des températures différentes, etc...

## Revendications

1. Système de ventilation paramétrable comprenant :
- un dispositif de commande d'au moins une bouche de ventilation paramétrable distante d'ouverture de section variable réglable de manière automatisée destiné à permettre un flux d'air dans un espace d'occupation humaine comportant au moins une pièce de service (10), comprenant :
- un boîtier (26) à disposer à distance du dispositif de ventilation,
- un système d'acquisition (28) solidaire du boîtier (26), ayant accès à l'air ambiant (30) dans l'espace d'occupation humaine, et adapté pour détecter au moins un paramètre chimique ou physique de l'air ambiant (30) au niveau du boîtier (26),
- un système informatisé de traitement (27), porté par le boîtier (26), et adapté pour déterminer au moins un paramètre de réglage de la bouche de ventilation distante à partir dudit au moins un paramètre détecté par le système d'acquisition (28),
- un dispositif de communication (33), porté par le boîtier (26), adapté pour transmettre en direction de la bouche de ventilation distante ledit au moins un paramètre de réglage,
- au moins une bouche de ventilation distante (18) d'ouverture de section variable selon le paramètre de réglage réglable de manière automatisée, destiné à permettre un flux d'air dans un espace d'occupation humaine (1), la bouche de ventilation (18) comprenant
- un dispositif de communication (35), adapté pour recevoir, depuis le dispositif de commande (25) ledit au moins un paramètre de réglage,
- un système de contrôle (44), adapté pour modifier la bouche de ventilation (18) de sorte à modifier le flux d'air à partir du paramètre de réglage
la bouche de ventilation (18) équipant une sortie d'air (16) qui permet à l'air présent dans l'espace d'occupation humaine de sortir vers l'extérieur et qui est disposée dans la au moins une pièce de service (10).

2. Système de ventilation paramétrable selon la revendication 1, dans lequel le système d'acquisition (28) du dispositif de commande est adapté pour détecter au moins un paramètre chimique et au moins un paramètre physique de l'air ambiant (30) au niveau du boîtier.

3. Système de ventilation paramétrable selon la revendication 1 ou 2, dans lequel le paramètre chimique est représentatif d'une concentration d'au moins une espèce prédéterminée dans l'air ambiant (30).

4. Système de ventilation paramétrable selon la revendication 3, dans lequel l'espèce prédéterminée est choisie parmi l'eau, le CO, le CO2, le formaldéhyde, un composant organique, les fumées.

5. Système de ventilation paramétrable selon l'une des revendications 1 à 4, dans lequel le paramètre physique est représentatif de la température, de l'hygrométrie relative de l'air ambiant ou de l'hygrométrie absolue de l'air ambiant (30).

6. Système de ventilation paramétrable selon l'une des revendications 1 à 5, dans lequel le dispositif de communication (33) du dispositif de commande comprend un émetteur porté par le boîtier (26) et adapté pour transmettre sans fil en direction du dispositif de ventilation ledit au moins un paramètre de réglage.

7. Système de ventilation paramétrable selon l'une des revendications 1 à 5, dans lequel le dispositif de communication (33) du dispositif de commande comprend un connecteur adapté pour être branché à un fil reliant le boîtier (26) au dispositif de ventilation.

8. Système de ventilation paramétrable selon l'une des revendications 1 à 7, comprenant une pluralité de bouches de ventilation paramétrables de l'espace d'occupation humaine, distantes entre elles d'ouvertures de sections variables réglables chacune de manière automatisée, destinés à permettre un flux d'air dans un espace d'occupation humaine, dans lequel le dispositif de commande est adapté pour commander une pluralité desdites bouches de ventilation paramétrables dans lequel le système informatisé de traitement (27) du dispositif de commande est adapté pour déterminer au moins un paramètre de réglage de chaque bouche de ventilation distante à partir dudit au moins un paramètre détecté par le système d'acquisition (28) du dispositif de commande,
dans lequel le dispositif de communication (33) du dispositif de commande est adapté pour transmettre en direction de chaque bouche de ventilation distante ledit au moins un paramètre de réglage respectif,
dans lequel chaque bouche de ventilation (18) réglable de manière automatisée comprend :
- un dispositif de communication (35), adapté pour recevoir, depuis le dispositif de commande (25) ledit au moins un paramètre de réglage associé,
- un système de contrôle (44), adapté pour modifier la bouche de ventilation (18) de sorte à modifier le flux d'air à partir du paramètre de réglage associé.

9. Système de ventilation paramétrable selon l'une des revendications 1 à 8, dans lequel le système informatisé de traitement (27) du dispositif de commande comprend une mémoire (31) stockant une base de données comprenant des données relatives à des relations entre des valeurs potentielles du paramètre de réglage et des valeurs potentielles dudit au moins un paramètre détecté,
Et dans lequel le système informatisé de traitement du dispositif de commande comprend un calculateur (43) adapté pour déterminer une valeur du paramètre de réglage à partir de la base de données et d'une valeur dudit au moins un paramètre détecté.

10. Système de ventilation paramétrable selon l'une des revendications 1 à 9, dans lequel le dispositif de commande comprend en outre un dispositif de communication entrant (40), porté par le boîtier (26), adapté pour recevoir depuis un système d'acquisition distant (37), au moins un paramètre additionnel, et dans lequel le système informatisé de traitement (27) du dispositif de commande est adapté pour déterminer l'au moins un paramètre de réglage de la bouche de ventilation distante également à partir dudit au moins un paramètre additionnel.

11. Système de ventilation paramétrable selon la revendication 10, dans lequel le paramètre additionnel est un paramètre chimique ou physique de l'air ambiant de l'espace d'occupation humaine distant du boîtier (26).

12. Système de ventilation paramétrable selon la revendication 10, dans lequel le paramètre additionnel est un paramètre représentatif des conditions extérieures à l'espace d'occupation humaine.

13. Système de ventilation paramétrable selon l'une quelconque des revendications 10 à 12, comprenant en outre un système d'acquisition distant (37) adapté pour détecter au moins un paramètre additionnel, et un dispositif de communication sortant (39), relié au système d'acquisition distant (37), et adapté pour transmettre en direction du dispositif de communication entrant (40) du dispositif de commande le paramètre additionnel détecté par le système d'acquisition distant (37).

14. Bâtiment ou portion de bâtiment comprenant une enceinte entourant un espace d'occupation humaine, et un système de ventilation (14) paramétrable selon l'une quelconque des revendications 1 à 13, dans lequel le dispositif de commande (25), le ou les dispositifs de ventilation (18), et/ou le ou les systèmes d'acquisition distants (37) sont disposés distants les uns des autres, notamment dans plusieurs pièces distinctes du bâtiment.

15. Procédé de commande d'au moins un dispositif de ventilation paramétrable distant réglable de manière automatisée, selon l'une quelconque des revendications 1 à 14, destiné à permettre un flux d'air dans un espace d'occupation humaine comportant au moins une pièce de service (10), comprenant :
- un système d'acquisition (28) solidaire d'un boîtier (26), et ayant accès à l'air ambiant dans l'espace d'occupation humaine, détecte au moins un paramètre chimique ou physique de l'air ambiant au niveau du boîtier (26),
- un système informatisé de traitement (27), porté par le boîtier (26), détermine au moins un paramètre de réglage d'un dispositif de ventilation (18) distant du boîtier (26) à partir dudit au moins un paramètre détecté,
- un dispositif de communication (33), porté par le boîtier (26), transmet en direction dudit au moins un dispositif de ventilation (18) ledit au moins un paramètre de réglage,
- un dispositif de communication (35) dudit au moins un dispositif de ventilation paramétrable (18) reçoit depuis le dispositif de commande (25) ledit au moins un paramètre de réglage,
- un système de contrôle (44) dudit au moins un dispositif de ventilation paramétrable (18) modifie le dispositif de ventilation (18) de sorte à modifier le flux d'air à partir du paramètre de réglage
le dispositif de ventilation (18) équipant une sortie d'air (16) qui permet à l'air présent dans l'espace d'occupation humaine de sortir vers l'extérieur et qui est disposée dans la au moins une pièce de service (10).

## Patentansprüche

1. Einstellbares Lüftungssystem, umfassend:
- eine Vorrichtung zur Steuerung wenigstens einer entfernten einstellbaren Lüftungsöffnung mit einer automatisiert einstellbaren Öffnung mit variablem Querschnitt, welche dazu geeignet ist, einen Luftstrom in einem von Menschen bewohnten Raum mit wenigstens einem Betriebsraum (10) zu ermöglichen, umfassend:
- ein Gehäuse (26), das in einem Abstand zur Lüftungsvorrichtung anzuordnen ist,
- ein in dem Gehäuse (26) integriertes Erfassungssystem (28), das Zugang zu der Umgebungsluft (30) in dem von Menschen bewohnten Raum hat und dazu ausgebildet ist, wenigstens einen chemischen oder physikalischen Parameter der Umgebungsluft (30) am Gehäuse (26) zu erfassen,
- ein computergestütztes Verarbeitungssystem (27), das an dem Gehäuse (26) getragen ist und dazu ausgebildet ist, basierend auf dem wenigstens einen von dem Erfassungssystem (28) erfassten Parameter wenigstens einen Parameter zum Einstellen der entfernten Lüftungsöffnung zu bestimmen,
- eine von dem Gehäuse (26) getragene Kommunikationsvorrichtung (33), die dazu ausgebildet ist, den wenigstens einen Einstellparameter in Richtung der entfernten Lüftungsöffnung zu übertragen,
- wenigstens eine entfernte Lüftungsöffnung (18) mit einer automatisiert einstellbaren Öffnung mit variablem Querschnitt, die gemäß dem Einstellparameter verändert werden kann, welche dazu geeignet ist, einen Luftstrom in einem von Menschen bewohnten Raum (1) zu ermöglichen, wobei die Lüftungsöffnung (18) umfasst
- eine Kommunikationsvorrichtung (35), die dazu ausgebildet ist, von der Steuervorrichtung (25) den wenigstens einen Einstellparameter zu empfangen,
- ein Steuersystem (44), welches dazu ausgebildet ist, die Lüftungsöffnung (18) so zu verändern, dass der Luftstrom basierend auf dem Einstellparameter verändert wird, wobei die Lüftungsöffnung (18) einen Luftauslass (16) aufweist, der es ermöglicht, dass die in dem von Menschen bewohnten Raum vorhandene Luft nach außen austritt, und der in dem wenigstens einen Betriebsraum (10) angeordnet ist.

2. Einstellbares Lüftungssystem nach Anspruch 1, wobei das Erfassungssystem (28) der Steuervorrichtung dazu ausgebildet ist, wenigstens einen chemischen Parameter und wenigstens einen physikalischen Parameter der Umgebungsluft (30) am Gehäuse zu erfassen.

3. Einstellbares Lüftungssystem nach Anspruch 1 oder 2, wobei der chemische Parameter repräsentativ für eine Konzentration wenigstens einer vorbestimmten Art in der Umgebungsluft (30) ist.

4. Einstellbares Lüftungssystem nach Anspruch 3, wobei die vorbestimmte Art gewählt ist aus Wasser, CO, CO₂, Formaldehyd, einer organischen Komponente sowie Rauch.

5. Einstellbares Lüftungssystem nach einem der Ansprüche 1 bis 4, wobei der physikalische Parameter repräsentativ für die Temperatur, die relative Feuchtigkeit der Umgebungsluft oder die absolute Feuchtigkeit der Umgebungsluft (30) ist.

6. Einstellbares Lüftungssystem nach einem der Ansprüche 1 bis 5, wobei die Kommunikationsvorrichtung (33) der Steuervorrichtung einen von dem Gehäuse (26) getragenen Sender umfasst, der dazu ausgebildet ist, den wenigstens einen Einstellparameter drahtlos in Richtung der Lüftungsvorrichtung zu übertragen.

7. Einstellbares Lüftungssystem nach einem der Ansprüche 1 bis 5, wobei die Kommunikationsvorrichtung (33) der Steuervorrichtung einen Stecker aufweist, der dazu ausgebildet ist, mit einer Leitung verbunden zu werden, die das Gehäuse (26) mit der Lüftungsvorrichtung verbindet.

8. Einstellbares Lüftungssystem nach einem der Ansprüche 1 bis 7, welches mehrere einstellbare Lüftungsöffnungen des von Menschen bewohnten Raums umfasst, die durch jeweils automatisiert einstellbare Öffnungen mit variablem Querschnitt voneinander beabstandet sind, zur Ermöglichung eines Luftstroms in einem von Menschen bewohnten Raum, wobei die Steuervorrichtung dazu ausgebildet ist, eine Vielzahl der einstellbaren Lüftungsöffnungen zu steuern, wobei das computergestützte Verarbeitungssystem (27) der Steuervorrichtung dazu ausgebildet ist, wenigstens einen Einstellparameter jeder entfernten Lüftungsöffnung basierend auf dem wenigstens einen vom Erfassungssystem (28) des Steuervorrichtung erfassten Parameter zu bestimmen,
wobei die Kommunikationsvorrichtung (33) der Steuervorrichtung dazu ausgebildet ist, den jeweiligen wenigstens einen Einstellparameter in Richtung jeder entfernten Lüftungsöffnung zu übertragen,
wobei jede automatisch einstellbare Lüftungsöffnung (18) umfasst:
- eine Kommunikationsvorrichtung (35), die dazu ausgebildet ist, von der Steuervorrichtung (25) den zugehörigen wenigstens einen Einstellparameter zu empfangen,
- ein Steuersystem (44), das dazu ausgebildet ist, die Lüftungsöffnung (18) derart zu verändern, dass der Luftstrom basierend auf dem zugehörigen Einstellparameter verändert wird.

9. Einstellbares Lüftungssystem nach einem der Ansprüche 1 bis 8, wobei das computergestützte Verarbeitungssystem (27) der Steuervorrichtung einen Speicher (31) umfasst, in dem eine Datenbank mit Daten gespeichert ist, die sich auf Beziehungen zwischen potenziellen Werten des Einstellparameters und potenziellen Werten des wenigstens einen erfassten Parameters beziehen,
und wobei das computergestützte Verarbeitungssystem der Steuervorrichtung einen Computer (43) umfasst, der dazu ausgebildet ist, einen Wert des Einstellparameters basierend auf der Datenbank und auf einem Wert des wenigstens einen erfassten Parameters zu bestimmen.

10. Einstellbares Lüftungssystem nach einem der Ansprüche 1 bis 9, wobei die Steuervorrichtung ferner eine vom Gehäuse (26) getragene eingehende Kommunikationsvorrichtung (40) aufweist, die dazu ausgebildet ist, von einem entfernten Erfassungssystem (37) wenigstens einen zusätzlichen Parameter zu empfangen, und wobei das computergestützte Verarbeitungssystem (27) der Steuervorrichtung dazu ausgebildet ist, den wenigstens einen Einstellparameter der entfernten Lüftungsöffnung auch basierend auf dem wenigstens einen zusätzlichen Parameter zu bestimmen.

11. Einstellbares Lüftungssystem nach Anspruch 10, wobei der zusätzliche Parameter ein chemischer oder physikalischer Parameter der Umgebungsluft des vom Gehäuse (26) entfernten, von Menschen bewohnten Raums ist.

12. Einstellbares Lüftungssystem nach Anspruch 10, wobei der zusätzliche Parameter ein Parameter ist, der für die Bedingungen außerhalb des von Menschen bewohnten Raums repräsentativ ist.

13. Einstellbares Lüftungssystem nach einem der Ansprüche 10 bis 12, ferner umfassend ein entferntes Erfassungssystem (37), das dazu ausgebildet ist, wenigstens einen zusätzlichen Parameter zu erfassen, und eine ausgehende Kommunikationsvorrichtung (39), die mit dem entfernten Erfassungssystem (37) verbunden ist und dazu ausgebildet ist, den von dem entfernten Erfassungssystem (37) erfassten zusätzlichen Parameter in Richtung der eingehenden Kommunikationsvorrichtung (40) der Steuervorrichtung zu übertragen.

14. Gebäude oder Gebäudeteil mit einem einen von Menschen bewohnten Raum umgebenden Gehäuse und einem nach einem der Ansprüche 1 bis 13 einstellbaren Lüftungssystem (14), wobei die Steuervorrichtung (25), die Lüftungseinrichtung(en) (18) und/oder das oder die entfernten Erfassungssysteme (37) beabstandet zueinander, insbesondere in mehreren getrennten Räumen des Gebäudes, angeordnet sind.

15. Verfahren zur Steuerung wenigstens einer entfernten automatisch einstellbaren Lüftungsvorrichtung nach einem der Ansprüche 1 bis 14, die dazu bestimmt ist, einen Luftstrom in einem von Menschen bewohnten Raum zu ermöglichen, der wenigstens einen Betriebsraum (10) umfasst, umfassend:
- ein Erfassungssystem (28), das mit einem Gehäuse (26) fest verbunden ist und Zugang zur Umgebungsluft in dem von Menschen bewohnten Raum hat und wenigstens einen chemischen oder physikalischen Parameter der Umgebungsluft am Gehäuse (26) erfasst,
- ein computergestütztes Verarbeitungssystem (27), das von dem Gehäuse (26) getragen ist und wenigstens einen Parameter zum Einstellen einer von dem Gehäuse (26) entfernten Lüftungsvorrichtung (18) basierend auf dem wenigstens einen erfassten Parameter bestimmt,
- eine Kommunikationsvorrichtung (33), die von dem Gehäuse (26) getragen ist und den wenigstens einen Einstellparameter in Richtung der wenigstens eine Lüftungsvorrichtung (18) überträgt,
- eine Kommunikationsvorrichtung (35) der wenigstens einen einstellbaren Lüftungsvorrichtung (18), die von der Steuervorrichtung (25) den wenigstens einen Einstellparameter empfängt,
- ein Steuersystem (44) der wenigstens einen einstellbaren Lüftungsvorrichtung (18), welches die Lüftungsvorrichtung (18) derart verändert, dass der Luftstrom basierend auf dem Einstellparameter verändert wird,
wobei die Lüftungsvorrichtung (18) einen Luftauslass (16) ausstattet, der die im von Menschen bewohnten Raum vorhandene Luft nach außen entweichen lässt und der in dem wenigstens einen Betriebsraum (10) angeordnet ist.

## Claims

1. Parameterisable ventilation system comprising:
- a device for controlling at least one remote parameterisable ventilation orifice with an opening with a variable cross-section adjustable in an automated manner intended to allow a flow of air in a human-occupation space including at least one service room (10), comprising:
- a housing (26) to be arranged at a distance from the ventilation device,
- an acquisition system (28) secured to the housing (26), having access to the ambient air (30) in the human-occupation space, and adapted for detecting at least one chemical or physical parameter of the ambient air (30) at the housing (26),
- a computerised processing system (27), carried by the housing (26), and adapted for determining at least one parameter for adjusting the remote ventilation orifice from said at least one parameter detected by the acquisition system (28),
- a communication device (33), carried by the housing (26), adapted for transmitting said at least one adjustment parameter in the direction of the remote ventilation orifice,
- at least one remote ventilation orifice (18) with an opening with a cross-section variable according to the adjustment parameter adjustable in an automated manner, intended to allow a flow of air in a human-occupation space (1), the ventilation orifice (18) comprising
- a communication device (35), adapted for receiving, from the control device (25), said at least one adjustment parameter,
- a control system (44), adapted for modifying the ventilation orifice (18) so as to modify the flow of air using the adjustment parameter
the ventilation orifice (18) equipping an air outlet (16) that enables the air present in the human-occupation space to leave towards the outside and which is disposed in the at least one service room (10).

2. Parameterisable ventilation system according to claim 1, wherein the acquisition system (28) of the control device is adapted for detecting at least one chemical parameter and at least one physical parameter of the ambient air (30) at the housing.

3. Parameterisable ventilation system according to claim 1 or 2, wherein the chemical parameter represents a concentration of at least one predetermined species in the ambient air (30).

4. Parameterisable ventilation system according to claim 3, wherein the predetermined species is chosen from water, CO, CO₂, formaldehyde, an organic component and fumes.

5. Parameterisable ventilation system according to one of claims 1 to 4, wherein the physical parameter represents the temperature, the relative humidity of the ambient air or the absolute humidity of the ambient air (30).

6. Parameterisable ventilation system according to one of claims 1 to 5, wherein the communication device (33) of the control device comprises a transmitter carried by the housing (26) and adapted for the wireless transmission, in the direction of the ventilation device, of said at least one adjustment parameter.

7. Parameterisable ventilation system according to one of claims 1 to 5, wherein the communication device (33) of the control device comprises a connector adapted for being connected to a wire connecting the housing (26) to the ventilation device.

8. Parameterisable ventilation system according to one of claims 1 to 7, comprising a plurality of parameterisable ventilation orifices of the human-occupation space, remote from each other, with openings with variable cross-sections each adjustable in an automated manner, intended to allow a flow of air in a human-occupation space, wherein the control device is adapted for controlling a plurality of said parameterisable ventilation orifices, wherein the computerised processing system (27) of the control device is adapted for determining at least one adjustment parameter for each remote ventilation orifice from said at least one parameter detected by the acquisition system (28) of the control device,
wherein the communication device (33) of the control device is adapted for transmitting, in the direction of each remote ventilation orifice, said at least one respective adjustment parameter,
wherein each ventilation orifice (18) adjustable in an automated manner comprises:
- a communication device (35), adapted for receiving, from the control device (25), said at least one associated adjustment parameter,
- a control device (44), adapted for modifying the ventilation orifice (18) so as to modify the flow of air from the associated adjustment parameter.

9. Parameterisable ventilation system according to one of claims 1 to 8, wherein the computerised processing system (27) of the control device comprises a memory (31) storing a database comprising data relating to relationships between potential values of the adjustment parameter and potential values of said at least one detected parameter, and wherein the computerised processing system of the control device comprises a computer (43) adapted for determining a value of the adjustment parameter from the database and from a value of said at least one detected parameter.

10. Parameterisable ventilation system according to one of claims 1 to 9, wherein the control device further comprises an incoming communication device (40), carried by the housing (26), adapted for receiving, from a remote acquisition system (37), at least one additional parameter, and wherein the computerised processing system (27) of the control device is adapted for determining the at least one parameter for adjusting the remote ventilation orifice also from said at least one additional parameter.

11. Parameterisable ventilation system according to claim 10, wherein the additional parameter is a chemical or physical parameter of the ambient air of the human-occupation space remote from the housing (26).

12. Parameterisable ventilation system according to claim 10, wherein the additional parameter is a parameter representing the conditions external to the human-occupation space.

13. Parameterisable ventilation system according to any one of claims 10 to 12, further comprising a remote acquisition system (37) adapted for detecting at least one additional parameter, and an outgoing communication device (39), connected to the remote acquisition system (37), and adapted for transmitting, in the direction of the incoming communication device (40) of the control device, the additional parameter detected by the remote acquisition system (37).

14. Building or portion of a building comprising an enclosure surrounding a human-occupation space, and a parameterisable ventilation system (14) according to any one of claims 1 to 13, wherein the control device (25), the ventilation device or devices (18) and/or the remote acquisition systems (37) are disposed remote from each other, in particular in several distinct rooms of the building.

15. Method for controlling at least one remote parameterisable ventilation device adjustable in an automated manner, according to any one of claims 1 to 14, intended to allow a flow of air in a human-occupation space including at least one service room (10), comprising:
- an acquisition system (28) secured to a housing (26), and having access to the ambient air in the human-occupation space, detects at least one chemical or physical parameter of the ambient air at the housing (26),
- a computerised processing system (27), carried by the housing (26), determines at least one parameter for adjusting a ventilation device (18) remote from the housing (26) from at least one detected parameter,
- a communication device (33), carried by the housing (26), transmits, in the direction of said at least one ventilation device (18), said at least one adjustment parameter,
- a communication device (35) of said at least one parameterisable ventilation device (18) receives, from the control device (25), said at least one adjustment parameter,
- a control system (44) of said at least one parameterisable ventilation device (18) modifies the ventilation device (18) so as to modify the flow of air from the adjustment parameter
the ventilation device (18) equipping an air outlet (16) that enables the air present in the human-occupation space to leave towards the outside and which is disposed in the at least one service room (10).
